# EUROPEAN PATENT APPLICATION

(11) **EP 4 310 116 A1**
(43) Date of publication of application: **24.01.2024**
(21) Application number: 22771273.4
(22) Date of filing: 10.03.2022
(51) Int. Cl.: C08F 220/14, C08F 210/14

(54) **MONOMER COMPOSITION, METHACRYLIC RESIN, AND METHOD FOR PRODUCING METHACRYLIC RESIN**

(30) Priority: 15.03.2021 JP 2021041292
(71) Applicant: Mitsubishi Chemical Corporation, Chiyoda-ku Tokyo 100-8251 (JP)
(72) Inventor: HIRANO Yusuke, Tokyo 100-8251 (JP); KANEMORI Kouichi, Tokyo 100-8251 (JP); ISOMURA Manabu, Tokyo 100-8251 (JP); TANIGUCHI Issei, Tokyo 100-8251 (JP); KAJIWARA Tooru, Tokyo 100-8251 (JP); MORITA Yusuke, Tokyo 100-8251 (JP); ITO Hiroaki, Tokyo 100-8251 (JP)
(74) Representative: Ter Meer Steinmeister & Partner
(86) International application number: PCT/JP2022/010617
(87) International publication number: WO 2022/196522

(57) **Abstract**

Provided is a monomer composition containing methyl methacrylate and an α-olefin.

## Description

### [Technical Field]

The present invention relates to a monomer composition, a methacrylic resin, and a method for producing a methacrylic resin.

Priority is claimed on Japanese Patent Application No. 2021-041292, filed March 15, 2021, the content of which is incorporated herein by reference.

### [Background Art]

A methacrylic resin is excellent in transparency, heat resistance, and weather resistance, and has well-balanced resin physical properties such as mechanical strength, thermal properties, and molding workability. In particular, a methacrylic resin plate obtained by forming the methacrylic resin into a plate shape is used for applications such as tanning beds, lighting equipment, skin therapy equipment, medical equipment, devices for curing or reacting with ultraviolet rays (hereinafter, referred to as "UV"), animal and plant growing equipment, skylights, and transparent members used for HID lamp.

In the above-described applications, when the methacrylic resin plate is installed in an environment exposed to UV such as direct sunlight and a UV lamp, the methacrylic resin plate has a problem that yellowish color (yellow tint) occurs.

Therefore, there has been a demand for a methacrylic resin in which the yellowish color does not occur even in a case of being exposed to UV for a long time, that is, a methacrylic resin having excellent weather resistance.

As a technique for improving the weather resistance of the methacrylic resin, Patent Document 1 discloses a methacrylic resin obtained by polymerizing a monomer such as methyl methacrylate in the presence of a hindered amine compound (HALS) having a specific structure, which is one of light stabilizers.

### [Citation List]

### [Patent Document]

### [Patent Document 1]

Japanese Unexamined Patent Application, First Publication No. S55-139404

### [Summary of Invention]

### [Technical Problem]

However, in the methacrylic resin disclosed in Patent Document 1, the weather resistance is improved as the amount of HALS added during the polymerization increases, but since the HALS itself is colored, there is a problem that the obtained methacrylic resin is also colored.

In addition, as the amount of HALS added increases, a polymerization efficiency decreases and a residual monomer in the methacrylic resin increases, which causes a problem of decreasing the weather resistance of the obtained methacrylic resin.

In view of the above circumstances, an object of the present invention is to provide a methacrylic resin which guarantees excellent heat resistance and has excellent weather resistance, in which yellowing is suppressed; a monomer composition for obtaining the methacrylic resin; and a method for producing a methacrylic resin using the monomer composition.

### [Solution to Problem]

In order to achieve the above-mentioned objects, the following configuration is adopted in the present invention.
[1] A monomer composition comprising:
   methyl methacrylate; and
   an α-olefin.
[2] The monomer composition according to [1],
   wherein a content of at least one compound selected from the group consisting of a compound of a transition metal and a compound of a Group 13 element is 0 ppm by mass or more and 7 × 10⁴ ppm by mass or less with respect to a total mass of the α-olefin.
[3] The monomer composition according to [1] or [2],
   wherein the α-olefin is contained in an amount of 0.1 ppm by mass or more with respect to a total mass of the monomer composition.
[4] The monomer composition according to any one of [1] to [3],
   wherein the α-olefin is a liquid or a solid at normal temperature and normal pressure.
[5] The monomer composition according to any one of [1] to [4],
   wherein the α-olefin includes an α-olefin having 6 or more and 12 or less carbon atoms.
[6] The monomer composition according to any one of [1] to [5],
   wherein the α-olefin includes 1-octene or 1-dodecene.
[7] A methacrylic resin obtained by radically polymerizing a monomer mixture containing the monomer composition according to any one of [1] to [6].
[8] A methacrylic resin comprising:
   an α-olefin monomer.
[9] The methacrylic resin according to [8],
   wherein the α-olefin monomer is contained in an amount of 0.1 ppm by mass or more.
[10] The methacrylic resin according to [8] or [9],
   wherein the α-olefin monomer is a liquid or a solid at normal temperature and normal pressure.
[11] The methacrylic resin according to any one of [8] to [10],
   wherein the α-olefin monomer includes an α-olefin having 6 or more and 12 or less carbon atoms.
[12] The methacrylic resin according to any one of [8] to [11],
   wherein the α-olefin monomer includes 1-octene or 1-dodecene.
[13] A resin molded product obtained by molding the methacrylic resin according to any one of [8] to [12].
[14] A method for producing a methacrylic resin, comprising:
   radically polymerizing a monomer mixture which contains a monomer composition containing methyl methacrylate and an α-olefin, in which a content of at least one compound selected from the group consisting of a compound of a transition metal and a compound of a Group 13 element is 7 × 10⁴ ppm by mass or less with respect to a total mass of the α-olefin.

### [Advantageous Effects of Invention]

According to the present invention, these problems can be solved. That is, according to the present invention, there are provided a methacrylic resin which guarantees excellent heat resistance and has excellent weather resistance, in which yellowing is suppressed; a monomer composition for obtaining the methacrylic resin; and a method for producing a methacrylic resin using the monomer composition.

### [Description of Embodiments]

Definitions of the following terms in the present specification and claims are as follows.
"Monomer" means a compound having a polymerizable carbon-carbon double bond.
"Unit based on a monomer" is a generic term for an atomic group directly formed by polymerizing one molecule of the monomer and for an atomic group obtained by chemically converting a part of the atomic group.
"(Meth)acrylate" is selected from "acrylate" and "methacrylate".
"(Meth)acrylic acid" is selected from "acrylic acid" and "methacrylic acid".
"α-olefin" is an olefin hydrocarbon having a carbon-carbon double bond at an α-position.
"α-olefin monomer" is an olefin hydrocarbon having a carbon-carbon double bond at the α-position, but is used with the intention of clearly indicating that it is a polymerization-unreacted monomer.
"Conjugation" means an overlap of p-orbitals beyond σ bonds existing between the two.
"Non-conjugated" means that no conjugation occurs.
"Obtained methacrylic resin" means a resin obtained by radically polymerizing a monomer mixture containing the monomer composition according to the embodiment of the present invention.
"Obtained resin molded product" means a molded product obtained by molding the methacrylic resin according to the embodiment of the present invention.
"% by mass" indicates a content proportion of a predetermined component contained in 100% by mass of the total amount.
"Mass-average molecular weight" is a value measured by using standard polystyrene as a standard sample with gel permeation chromatography.
"Normal temperature" means 5°C to 35°C.
"Normal pressure" means 900 to 1100 hPa.
"Transition metal" means a metal element located in Group 3 to Group 11 in the periodic table. Typically, scandium (Sc), titanium (Ti), vanadium (V), chromium (Cr), manganese (Mn), iron (Fe), cobalt (Co), nickel (Ni), copper (Cu), zinc (Zn), yttrium (Y), zirconium (Zr), niobium (Nb), molybdenum (Mo), technetium (Tc), ruthenium (Ru), rhodium (Rh), palladium (Pd), silver (Ag), cadmium (Cd), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), hafnium (Hf), tantalum (Ta), tungsten (W), rhenium (Re), osmium (Os), iridium (Ir), platinum (Pt), gold (Au), mercury (Hg), and the like are mentioned.
"Group 13 element" mean an element located in Group 13 in the periodic table. Typical, boron (B), aluminum (Al), gallium (Ga), indium (In), and thallium (Tl) are mentioned.
The "periodic table" means "Periodic Table of Elements" (URL https://pubchem.ncbi.nlm.nih.gov/periodic-table/).

### <Monomer composition>

The monomer composition according to the embodiment of the present invention contains methyl methacrylate and an α-olefin. In addition, other components may be contained as long as the effects of the present invention are not impaired.

Since the monomer composition according to the embodiment of the present invention contains methyl methacrylate, weather resistance of the obtained methacrylic resin is favorable and yellowing is suppressed.

In addition, since the monomer composition according to the embodiment of the present invention contains the α-olefin, weather resistance of the obtained methacrylic resin is favorable and yellowing is suppressed.

A content of the methyl methacrylate contained in the monomer composition according to the embodiment of the present invention is not particularly limited, but is preferably 85% by mass or more, more preferably 90% by mass or more, still more preferably 95% by mass or more, and particularly preferably 98% by mass or more with respect to the total mass of the monomer composition.

However, the content of the methyl methacrylate is less than 100% by mass with respect to 100% of the total mass of the monomer composition according to the embodiment of the present invention.

In addition, the total content of the methyl methacrylate and the α-olefin with respect to 100% of the total mass of the monomer composition according to the embodiment of the present invention does not exceed 100% by mass.

A lower limit of a content of the α-olefin contained in the monomer composition according to the embodiment of the present invention is not particularly limited, but since the weather resistance of the obtained methacrylic resin is more favorable, the content thereof is preferably 0.1 ppm by mass or more, more preferably 10 ppm by mass or more, still more preferably 60 ppm by mass or more, and particularly preferably 80 ppm by mass or more with respect to the total mass of the monomer composition.

An upper limit of the content of the α-olefin contained in the monomer composition according to the embodiment of the present invention is not particularly limited, but since heat resistance of the obtained methacrylic resin can be more favorably maintained, the content thereof is preferably 10,000 ppm by mass or less, more preferably 5,000 ppm by mass or less, still more preferably 4,000 ppm by mass or less, and particularly preferably 3,000 ppm by mass or less.

The above-described preferred upper limit value and lower limit value can be arbitrarily combined.

Specifically, the content of the α-olefin contained in the monomer composition according to the embodiment of the present invention is preferably 0.1 ppm by mass or more and 10,000 ppm by mass or less, more preferably 10 ppm by mass or more and 5,000 ppm by mass or less, still more preferably 60 ppm by mass or more and 4,000 ppm by mass or less, and particularly preferably 80 ppm by mass or more and 3,000 ppm by mass or less.

In the α-olefin, a coupling product between olefin hydrocarbons to which radicals generated by ultraviolet rays are added is stable, and it is presumed that radical capture effect is excellent. As the α-olefin, a chain-type α-olefin is preferable.

The above-described α-olefin preferably includes an α-olefin having 6 or more and 12 or less carbon atoms. A proportion of the α-olefin having 6 or more and 12 or less carbon atoms in the α-olefin is not particularly limited, but is preferably 80% by mass or more, more preferably 90% by mass or more, and particularly preferably 99% by mass or more. It is particularly preferable that the above-described α-olefin consists of the α-olefin having 6 or more and 12 or less carbon atoms.

The number of carbon atoms of the above-described α-olefin having 6 or more and 12 or less carbon atoms is not particularly limited as long as the number of carbon atoms is 6 or more and 12 or less, but it is preferably 8 or more and 10 or less.

In a case where the number of carbon atoms of the above-described α-olefin is the lower limit value or more of the above-described range, the α-olefin tends to remain in the obtained methacrylic resin without volatilizing due to heating during the polymerization. Therefore, it is possible to sufficiently contribute to the improvement of weather resistance.

As the above-described α-olefin having 6 or more and 12 or less carbon atoms, 2-ethyl-1-hexene, 2-methyl-1-heptene, 4-methyl-1-heptene, 1-hexene, 1-heptene, 1-octene, 1-nonene, 1-decene, 1-undecene, and 1-dodecene are exemplary examples. Among these, the α-olefin having 6 or more and 12 or less carbon atoms is preferably at least one selected from the group consisting of 2-ethyl-1-hexene, 1-octene, and 1-dodecene, more preferably 1-octene or 1-dodecene, and still more preferably 1-octene since the α-olefin tends to remain in the methacrylic resin.

A proportion of 1-octene in the above-described α-olefin is not particularly limited, but is preferably 50% by mass or more and more preferably 80% by mass or more with respect to the total mass of the α-olefin.

In the monomer composition according to the embodiment of the present invention, it is preferable that a content of at least one compound selected from the group consisting of a compound of a transition metal and a compound of a Group 13 element is 0 ppm by mass or more and 7 × 10⁴ ppm by mass or less with respect to the total mass of the α-olefin.

As compared with the methyl methacrylate which is a conjugated monomer, the α-olefin in the present invention does not have a resonance stabilizing effect and its reactivity is remarkably low. Therefore, in a case where the at least one compound selected from the group consisting of a compound of a transition metal and a compound of a Group 13 element is used as a specific polymerization catalyst, unreacted α-olefin (hereinafter, also referred to as "α-olefin monomer") remains in the obtained methacrylic resin unless under special conditions for exhibiting an effect as a catalyst. It is considered that the above-described α-olefin monomer remains in the methacrylic resin, so that the weather resistance of the obtained methacrylic resin is favorable and the effect of suppressing yellowing is exhibited. That is, because the above-described at least one compound does not exhibit the effect as a catalyst, a content of the at least one compound with respect to the total mass of the above-described α-olefin is preferably 7 × 10⁴ ppm by mass or less, more preferably 1 × 10⁴ ppm by mass or less, still more preferably 1,000 ppm by mass or less, and it is particularly preferable that the at least one compound is not contained. Here, the "not contained" means that the content is below the detection limit.

As the type of the at least one compound, for example, a compound of transition metals of Group 5 to Group 11, which have a chelating ligand, and Lewis acid catalysts are exemplary examples.

As specific examples of the transition metal, vanadium, niobium, tantalum, chromium, molybdenum, tungsten, manganese, iron, platinum, ruthenium, cobalt, rhodium, nickel, palladium, and copper are exemplary examples. Among these, as the transition metal, transition metals of Group 8 to Group 11 are preferable, transition metals of Group 10 are more preferable, and nickel (Ni) or palladium (Pd) is still more preferable. One kind of these transition metals may be used alone, or two or more kinds thereof may be used in combination.

The above-described chelating ligand has at least two atoms selected from the group consisting of P, N, O, and S, includes a ligand which is bidentate or multidentate, and is electronically neutral or anionic. A review by Ittel and the like illustrates a structure of the chelating ligand (Ittel et al., "Late-Metal Catalysts for Ethylene Homo- and Copolymerization", Chemical Reviews, March 25, 2000, Vol. 100, No. 4, pp. 1169 to 1204).

As the above-described chelating ligand, for example, bidentate anionic P and O ligands are exemplary examples. As the above-described bidentate anionic P and O ligand, for example, phosphorus sulfonic acid, phosphorus carboxylic acid, phosphorus phenol, and phosphorus enolate are exemplary examples. As chelating ligands other than the above-described bidentate anionic P and O ligand, for example, bidentate anionic N and O ligands are exemplary examples. As the above-described bidentate anionic N and O ligand, for example, salicylaldominate and pyridinecarboxylic acid are exemplary examples. As chelating ligands other than the above-described bidentate anionic P and O ligand and the above-described bidentate anionic N and O ligand, for example, diimine ligands, diphenoxide ligands, and diamide ligands are exemplary examples.

Here, as the catalyst which is the compound of a transition metal of Group 5 to Group 11, having the above-described chelating ligand, catalysts such as so-called SHOP catalysts and Drent catalysts are typically known. The SHOP catalyst is a catalyst in which a phosphorus-based ligand having an aryl group which may have a substituent is coordinated to a nickel metal. In addition, the Drent catalyst is a catalyst in which a phosphorus-based ligand having an aryl group which may have a substituent is coordinated to a palladium metal.

In addition, as a typical Lewis acid catalyst, a cationic complex of dihydric palladium or platinum is an exemplary example. The above-described cationic complex of dihydric palladium or platinum exhibits Lewis acidity, and is useful as a Lewis acid catalyst for Diels-Alder reaction and the like. In addition, a compound of boron and aluminum in Group 13 element, a compound of titanium as a transition metal in the 4th period, a compound of zirconium as a transition metal in the 5th period, and the like are also preferable because they exhibit Lewis acidity.

As the other components, for example, the following monomers and additives are exemplary examples.

### (Monomer)

1) Methacrylic acid ester:
   for example, ethyl methacrylate, isopropyl methacrylate, n-butyl methacrylate, iso-butyl methacrylate, tert-butyl methacrylate, 2-ethylhexyl methacrylate, phenyl methacrylate, or benzyl methacrylate;
2) Acrylic acid ester:
   for example, methyl acrylate, ethyl acrylate, n-butyl acrylate, iso-butyl acrylate, tert-butyl acrylate, or 2-ethylhexyl acrylate;
3) Unsaturated carboxylic acid:
   for example, acrylic acid, methacrylic acid, maleic acid, or itaconic acid;
4) Unsaturated carboxylic acid anhydride:
   for example, maleic acid anhydride or itaconic acid anhydride;
5) Maleimide:
   for example, N-phenylmaleimide or N-cyclohexylmaleimide;
6) Hydroxy group-containing vinyl monomer:
   for example, 2-hydroxyethyl acrylate, 2-hydroxyethyl methacrylate, or 2-hydroxypropyl methacrylate;
7) Vinyl ester:
   for example, vinyl acetate or vinyl benzoate;
8) Vinyl chloride, vinylidene chloride, and derivatives thereof;
9) Nitrogen-containing vinyl monomer:
   for example, methacrylic amide or acrylonitrile;
10) Epoxy group-containing monomer:
   for example, glycidyl acrylate or glycidyl methacrylate;
11) Aromatic vinyl monomer:
   for example, styrene or α-methylstyrene;
12) Alkanediol di(meth)acrylate:
   for example, ethylene glycol di(meth)acrylate, 1,2-propylene glycol di(meth)acrylate, 1,3-butylene glycol di(meth)acrylate, or 1,6-hexanediol di(meth)acrylate;
13) Polyoxyalkylene glycol di(meth)acrylate:
   for example, diethylene glycol di(meth)acrylate, dipropylene glycol di(meth)acrylate, triethylene glycol (meth)acrylate, tetraethylene glycol di(meth)acrylate, polyethylene glycol di(meth)acrylate, or neopentyl glycol di(meth)acrylate;
14) Vinyl monomer having two or more ethylenically unsaturated bonds in the molecule:
   for example, divinylbenzene;
15) Unsaturated polyester prepolymer obtained from at least one polyvalent carboxylic acid including an ethylenically unsaturated polycarboxylic acid and at least one diol; and
16) Vinyl ester prepolymer obtained by acrylic-modifying a terminal of epoxy group.

### (Additive)

As the above-described additive, known additives such as a release agent, a lubricant, a plasticizer, an antioxidant, an antistatic agent, a light stabilizer, an UV absorber, a flame retardant, a flame retardant aid, a polymerization inhibitor, a filler, a pigment, a dye, a silane coupling agent, a leveling agent, an antifoaming agent, and a fluorescent agent are exemplary examples.

The above-described monomer and the above-described additive can be used alone, or in combination of two or more as the other components.

Among the above, as the other components, from the viewpoint of excellent balance of transparency, heat resistance, and moldability of the obtained methacrylic resin, at least one monomer selected from the group consisting of methyl acrylate, ethyl acrylate, and n-butyl acrylate is preferable.

In addition, as the other components, the following monomers are exemplary examples, in addition to the above-described monomers.

As the above-described additive, known additives such as a release agent, a lubricant, a plasticizer, an antioxidant, an antistatic agent, a light stabilizer, an UV absorber, a flame retardant, a flame retardant aid, a polymerization inhibitor, a filler, a pigment, a dye, a silane coupling agent, a leveling agent, an antifoaming agent, and a fluorescent agent are exemplary examples.

In addition, it is not impeded that the monomer composition according to the embodiment of the present invention contains a compound such as methacrolein and methanol, which is inevitably mixed with the methyl methacrylate.

### <Monomer mixture>

The monomer mixture of the present invention is a raw material for the methacrylic resin according to the embodiment of the present invention, which will be described later.

The above-described monomer mixture contains 60% by mass or more of the monomer composition according to the embodiment of the present invention described above. Here, the "contains 60% by mass or more of the monomer composition according to the embodiment of the present invention" means containing 100% by mass of the monomer composition according to the embodiment of the present invention described above with respect to 100% by mass of the total mass of the above-described monomer mixture, or means containing 60% by mass or more and less than 100% by mass of the monomer composition according to the embodiment of the present invention and more than 0% by mass and 40% by mass or less of "other monomers copolymerizable with the monomer composition according to the embodiment of the present invention" (also simply referred to as "other monomers") with respect to 100% by mass of the total mass of the above-described monomer mixture, in which the total of the monomer composition and the other monomers does not exceed 100% by mass.

As the other monomers, the monomers 1) to 16) listed as monomers which may be contained as other compounds in the description of the monomer composition according to the embodiment of the present invention above are exemplary examples.

The monomers 1) to 16) described above can be used alone, or in combination of two or more as the other monomers.

Among the monomers 1) to 16) described above, from the viewpoint of excellent balance of heat resistance and transparency of the obtained methacrylic resin, ethylene glycol dimethacrylate or neopentyl glycol dimethacrylate is preferable.

A polymerization initiator can be added to the above-described monomer mixture. As the above-described polymerization initiator, for example, organic peroxides and compounds similar to an azo compound are exemplary examples.

An amount of the above-described polymerization initiator added in the above-described monomer mixture is not particularly limited, but is preferably 0.005% to 5% by mass with respect to 100% by mass of radically polymerizable monomers in the above-described monomer mixture.

In the above-described monomer mixture, known additives such as a release agent, a lubricant, a plasticizer, an antioxidant, an antistatic agent, a light stabilizer, an UV absorber, a flame retardant, a flame retardant aid, a polymerization inhibitor, a filler, a pigment, a dye, a silane coupling agent, a leveling agent, an antifoaming agent, a fluorescent agent, and a chain transfer agent can be added as necessary.

### <Methacrylic resin>

The methacrylic resin according to the embodiment of the present invention is obtained by radically polymerizing a monomer mixture containing 60% by mass or more of the above-described monomer composition according to the embodiment of the present invention.

A mass-average molecular weight (Mw) of the above-described methacrylic resin is not particularly limited, but can be appropriately set in a range of 100,000 to 1,000,000 depending on the intended use of the methacrylic resin, and the like.

By appropriately increasing the mass-average molecular weight, solvent resistance and chemical resistance can be increased.

### <Method for producing methacrylic resin>

For example, the methacrylic resin according to the embodiment of the present invention is obtained by polymerizing a monomer mixture containing 100% by mass of the above-described monomer composition according to the embodiment of the present invention, or polymerizing a monomer composition containing 60% by mass or more and less than 100% by mass of the above-described monomer composition according to the embodiment of the present invention and more than 0% by mass and 40% by mass or less of "other monomers copolymerizable with the monomer composition according to the embodiment of the present invention" (also simply referred to as "other monomers"), in which the total of respective components of the monomer mixture and the other monomers (including the polymerization initiator and various additives) does not exceed 100% by mass.

A polymerization method of the above-described monomer mixture is not particularly limited, and for example, a bulk polymerization method, a solution polymerization method, an emulsion polymerization method, and a suspension polymerization method are exemplary examples. From the viewpoint of being excellent in transparency of the methacrylic resin, environmental load due to the use of solvent and the like, and productivity and producing cost of a resin laminate, a bulk polymerization method is preferable as the polymerization method of the above-described monomer mixture.

Specific methods of the bulk polymerization method are not particularly limited, and the methacrylic resin can be produced by using a known casting polymerization method such as a cell casting method and a continuous casting method.

The above-described mass-average molecular weight (Mw) of the methacrylic resin can be controlled by adjusting the polymerization temperature, the polymerization time, the amount of the polymerization initiator added, the type and amount of the chain transfer agent added, and the like.

The casting polymerization method is a method in which a methacrylic resin is obtained by casting and polymerizing a monomer mixture for obtaining the methacrylic resin or a syrup described below in a mold made of two inorganic glass plates or metal plates (for example, SUS plates) arranged facing each other at a predetermined interval with the periphery sealed with a gasket such as a soft resin tube, and then the obtained methacrylic resin is peeled off from the mold to obtain a resin molded product.

As the above-described syrup, a syrup containing a polymer (partial polymer) obtained by polymerizing a part of the above-described monomer mixture and the remaining unreacted monomer mixture can be used.

In addition, a syrup of the type in which the methacrylic resin according to the embodiment of the present invention is dissolved in the above-described monomer mixture can also be used.

A molecular weight of the partial polymer in the above-described syrup or the dissolved methacrylic resin in the syrup is not particularly limited, and a mass-average molecular weight thereof can be 50,000 or more and 300,000 or less. In addition, a mixing proportion of the above-described partial polymer in the above-described syrup or the above-described dissolved methacrylic resin, and the above-described monomer mixture is not particularly limited, but in terms of mass ratio, the above-described partial polymer or the above-described methacrylic resin: the above-described monomer mixture can be 2:98 to 50:50.

The mold for casting polymerization is not particularly limited, and a known mold can be used. As a mold for obtaining a plate-shaped resin molded product, for example, a mold for cell casting and a mold for continuous casting are exemplary examples.

As the mold for cell casting, for example, a mold in which two plate-shaped products such as an inorganic glass plate, a chromium-plated metal plate, and a stainless steel plate are arranged facing each other at a predetermined interval, and a gasket is disposed on edges of the plates to form a sealed space between the plate-shaped products and the gasket is an exemplary example.

As the mold for continuous casting, for example, a mold in which a sealed space is formed by opposing surfaces of a pair of endless belts running in the same direction at the same speed and gaskets running at the same speed as the endless belt on both sides of the endless belt is an exemplary example.

A gap between cavities of the molds is appropriately adjusted to obtain a resin plate having a desired thickness, and is generally 1 to 30 mm.

### <Effect>

The monomer composition according to the embodiment of the present invention contains the α-olefin, and the methacrylic resin obtained by radically polymerizing a monomer mixture containing the monomer composition according to the embodiment of the present invention guarantees excellent heat resistance, has favorable weather resistance, and suppresses yellowing.

Although it is not clear why the methacrylic resin which guarantees excellent heat resistance, has favorable weather resistance, and suppresses yellowing is obtained from the monomer composition according to the embodiment of the present invention, containing the α-olefin, but it is presumed as follows.

In a polymer (methacrylic resin) having a unit based on methyl methacrylate, a main chain or a side chain is cleaved by light or heat to generate a radical species. Usually, the generated radical species causes yellowing of the methacrylic resin and a decrease in mechanical strength due to a decrease in molecular weight.

However, as described above, as compared with the methyl methacrylate which is a conjugated monomer, the α-olefin in the present invention does not have a resonance stabilizing effect and its reactivity is remarkably low. Therefore, in a case where the compound of a transition metal or the compound of Group 13 element is used as a specific polymerization catalyst, unreacted α-olefin (particularly, also referred to as "α-olefin monomer") remains in the obtained methacrylic resin unless under special conditions for exhibiting an effect as a catalyst. The above-described α-olefin monomer remains in the methacrylic resin. It is considered that the above-described α-olefin monomer functions as a radical capturing agent.

Specifically, a hydrogen atom bonded to a carbon atom adjacent to a double bond moiety of the above-described α-olefin monomer is extracted to the above-described radical species. The olefin hydrocarbon from which the hydrogen atom (hydrogen radical) has been extracted captures the other radical species described above. As a result, it is considered that the excellent heat resistance of the methacrylic resin is guaranteed, the weather resistance is excellent, and the yellowing is suppressed.

### [Examples]

Hereinafter, the present invention will be described in more detail with reference to Examples, but the present invention is not limited to Examples described below.

In the following description, "part" refers to "part by mass".

In addition, in Table 1, "Formulating amount (part by mass)" indicates part by mass and ppm by mass in a case where the total formulating amount of MMA and BA is set to be 100 parts by mass, and "Formulating amount (% by mass)" indicates % by mass and ppm by mass in a case where the total mass of the monomer composition is set to be 100% by mass. In addition,"-" indicates that the compound is not formulated.

Abbreviations and names of compounds used in Examples and Comparative Examples are as follows.
- "MMA": methyl methacrylate (manufactured by Mitsubishi Chemical Corporation)
- BA: n-butyl acrylate (manufactured by Mitsubishi Chemical Corporation)
- OCT: 1-octene (manufactured by Tokyo Chemical Industry Co., Ltd.)
- HEX: 1-hexene (manufactured by Tokyo Chemical Industry Co., Ltd.)
- 2E1H: 2-ethyl-1-hexene (manufactured by Tokyo Chemical Industry Co., Ltd.)
- HALS: tetrakis(2,2,6,6-tetramethyl-4-piperidyl) butane-1,2,3,4-tetracarboxylate (trade name: LA-57, manufactured by ADEKA CORPORATION)

### [Measurement method and evaluation method]

### <Method for measuring residual amount of α-olefin monomer in methacrylic resin>

### (1) Procedure for preparing sample and test solution

The obtained resin molded product was finely pulverized, and 0.2 g of the pulverized resin was dissolved in 10 mL of acetone for testing residual pesticides (hereinafter, simply referred to as "acetone"). After the resin was dissolved, 1 mL of an internal standard solution was added thereto with a transfer pipette. A 0.1% by volume of methyl salicylate/acetone solution was used as the internal standard solution. Three test solutions with different concentrations were prepared by diluting the target standard reagent with the acetone, a three-point calibration curve was created by gas chromatography-mass spectrometry (GC/MS) measurement, which will be described later, and the concentration of each target substance in the sample was quantified. A 0.1% by volume of methyl salicylate/acetone solution was used as the internal standard solution.

### (GC/MS measurement conditions)

Device: GC HP6890/MS HP5973 (manufactured by Agilent)
Ionization method: electron ionization (EI) method
Column: DB-WAX 60 m × 250 µm × 0.5 µm (manufactured by Agilent)
Temperature rise condition: 70°C (5 min) → 200°C (5 min); rate = 10 °C/min
Injection port temperature: 220°C
AUX temperature: 230°C
Ion source temperature: 230°C
Split ratio: 10:1
Flow rate: 2.0 mL/min
Average linear velocity: 37 cm/sec
Injection volume: 1 µL
Measurement mode: SIM

### <Method for evaluating heat resistance>

As an index of heat resistance of the methacrylic resin obtained in Examples and Comparative Examples, heat deflection temperature (hereinafter, referred to as "HDT') (°C) under load was measured in accordance with JIS K 7191 for test pieces (length 127 mm × width 12.7 mm × thickness 3 mm) of the resin molded products obtained in Examples and Comparative Examples.

### <Method for evaluating weather resistance>

The weather resistance of the methacrylic resin obtained in Examples and Comparative Examples was evaluated by the following method.

UV exposure test was carried out using a metal weather ultra-accelerated weather resistance tester (manufactured by DAIPLA WINTES CO., LTD., device name: KU-R5CI-A) equipped with a metal halide lamp (manufactured by DAIPLA WINTES CO., LTD., model: MW-60W) and a light cut filter (manufactured by DAIPLA WINTES CO., LTD., model: KF-1), and according to the following method, a yellowness index (YI) and a change in yellowness index (ΔYI) were measured from before the start of the UV exposure test to 200 hours after the start.

Specifically, a test piece (a square shape having a length of 50 mm × a width of 50 mm; thickness: 5 mm) obtained by cutting out the resin molded product obtained in Examples and Comparative Examples into squares was placed in an evaluation chamber of the above-described metal weather ultra-accelerated weather resistance tester.

An irradiation intensity of ultraviolet rays (UV) radiated from the above-described metal halide lamp to the test piece was corrected so that an irradiation intensity at a wavelength of 330 to 390 nm, measured with an ultraviolet illuminometer (manufactured by Ushio Inc., device name: UIT-101) was 80 mW/cm². The evaluation chamber of the metal weather ultra-accelerated weather resistance tester was set to be in an environment of a temperature of 63°C and a humidity of 50 RH%, and the test piece was irradiated with ultraviolet light (irradiation intensity: 80 mW/cm²) from the metal halide lamp.

The yellowness index (YI) of the above-described test piece was measured in accordance with ASTM D1925 using a spectroscopic color difference meter (manufactured by NIPPON DENSHOKU INDUSTRIES Co., LTD., device name: SE-7700) as an index of the weather resistance. Using one test piece before the start of the UV exposure test and one test piece 200 hours after the start of the UV exposure test, measurement was performed once for each test piece, and a change in measured value was defined as a change in yellowness index (ΔYI).

### [Example 1]

### (1) Preparation of monomer composition

In a reactor (polymerization kettle) equipped with a cooling tube, a thermometer, and a stirrer, a monomer composition was prepared by adding 98.0 parts by mass of MMA and 2.0 parts by mass of BA so that the content of 1-octene was 500 ppm by mass.

### (2) Production of syrup

The prepared monomer composition was supplied to a reactor and bubbled with nitrogen gas while stirring, and then heating was started. When the internal temperature of the reactor reached 80°C, 0.12 parts by mass of 2,2'-azobis-(2,4-dimethylvaleronitrile) as a radical polymerization initiator and 0.075 parts by mass of 1-dodecanethiol as a chain transfer agent were added thereto to obtain a monomer mixture. The internal temperature of the reactor was further raised to 100°C, and then maintained for 9 minutes. Next, the internal temperature of the reactor was lowered to room temperature to obtain a syrup. With respect to 100% by mass of the total mass of the syrup, the content of the polymer in the syrup was 25% by mass, and the content of unreacted monomer composition was 75% by mass.

### (3) Casting polymerization

0.15 parts by mass of t-hexyl peroxypivalate as a radical polymerization initiator was added to 100 parts by mass of the above-described syrup to obtain a polymerizable composition. Next, the polymerizable composition was poured into a space with a gap interval of 6.5 mm, which was provided by arranging a soft resin gasket at the end of SUS plates between two SUS plates facing each other, and heated at 80°C for 30 minutes and then at 130°C for 30 minutes to cure the polymerizable composition, thereby obtaining a methacrylic resin. Next, after cooling the methacrylic resin together with the SUS plates, the SUS plates were removed to obtain a plate-shaped resin molded product having a thickness of 5 mm. Table 1 shows evaluation results of the obtained resin molded product.

### [Examples 2 to 6]

A methacrylic resin and a resin molded product were produced in the same manner as in Example 1, except that the formulation of the monomer composition was changed as shown in Table 1. Table 1 shows evaluation results of the obtained resin molded product.

### [Example 7]

A methacrylic resin and a resin molded product were produced in the same manner as in Example 1, except that the formulation of the monomer composition was changed as shown in Table 1, and 1-octene was changed to 1-hexene. Table 1 shows evaluation results of the obtained resin molded product.

### [Example 8]

A methacrylic resin and a resin molded product were produced in the same manner as in Example 1, except that the formulation of the monomer composition was changed as shown in Table 1, and 1-octene was changed to 2-ethyl-1-hexene. Table 1 shows evaluation results of the obtained resin molded product.

### [Comparative Examples 1 to 3]

A methacrylic resin and a resin molded product were produced in the same manner as in Example 1, except that the formulation of the monomer composition was changed as shown in Table 1. Table 1 shows evaluation results of the obtained resin molded product.

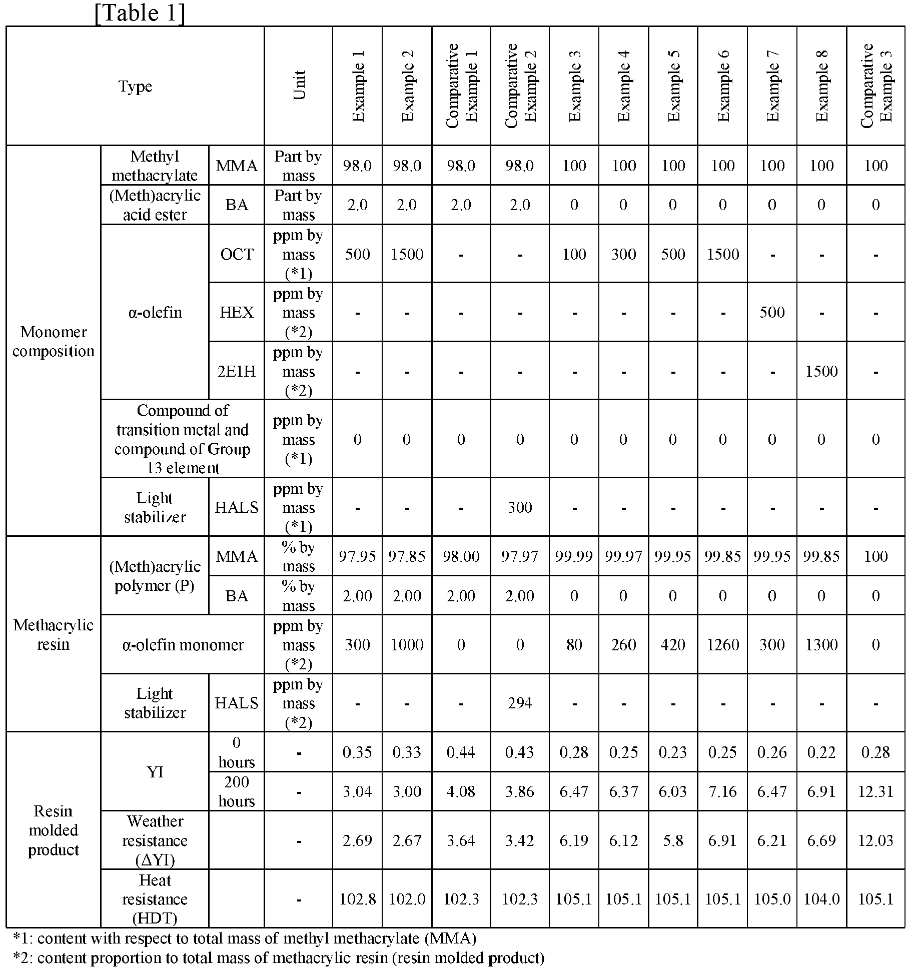

The resin molded products obtained in Examples 1 to 8 maintained excellent heat resistance, had favorable weather resistance, and suppressed yellowing. It is considered that this is because the monomer composition contained the methyl methacrylate and the α-olefin, and the α-olefin monomer remained in the methacrylic resin.

In the resin molded products obtained in Comparative Example 1 and Comparative Example 3, since the monomer composition did not contain the α-olefin and the α-olefin monomer did not remain in the methacrylic resin, the yellowing was observed and the weather resistance was insufficient.

In the resin molded product obtained in Comparative Example 2, since the monomer composition contained the hindered amine compound instead of the α-olefin, the yellowing was observed and the weather resistance was slightly insufficient.

## Claims

1. A monomer composition comprising:
methyl methacrylate; and
an α-olefin.

2. The monomer composition according to Claim 1,
wherein a content of at least one compound selected from the group consisting of a compound of a transition metal and a compound of a Group 13 element is 0 ppm by mass or more and 7 × 10⁴ ppm by mass or less with respect to a total mass of the α-olefin.

3. The monomer composition according to Claim 1 or 2,
wherein the α-olefin is contained in an amount of 0.1 ppm by mass or more with respect to a total mass of the monomer composition.

4. The monomer composition according to any one of Claims 1 to 3,
wherein the α-olefin is a liquid or a solid at normal temperature and normal pressure.

5. The monomer composition according to any one of Claims 1 to 4,
wherein the α-olefin includes an α-olefin having 6 or more and 12 or less carbon atoms.

6. The monomer composition according to any one of Claims 1 to 5,
wherein the α-olefin includes 1-octene or 1-dodecene.

7. A methacrylic resin obtained by radically polymerizing a monomer mixture containing the monomer composition according to any one of Claims 1 to 6.

8. A methacrylic resin comprising:
an α-olefin monomer.

9. The methacrylic resin according to Claim 8,
wherein the α-olefin monomer is contained in an amount of 0.1 ppm by mass or more.

10. The methacrylic resin according to Claim 8 or 9,
wherein the α-olefin monomer is a liquid or a solid at normal temperature and normal pressure.

11. The methacrylic resin according to any one of Claims 8 to 10,
wherein the α-olefin monomer includes an α-olefin having 6 or more and 12 or less carbon atoms.

12. The methacrylic resin according to any one of Claims 8 to 11,
wherein the α-olefin monomer includes 1-octene or 1-dodecene.

13. A resin molded product obtained by molding the methacrylic resin according to any one of Claims 8 to 12.

14. A method for producing a methacrylic resin, comprising:
radically polymerizing a monomer mixture which contains a monomer composition containing methyl methacrylate and an α-olefin, in which a content of at least one compound selected from the group consisting of a compound of a transition metal and a compound of a Group 13 element is 7 × 10⁴ ppm by mass or less with respect to a total mass of the α-olefin.
